# DEMANDE DE BREVET EUROPEEN

(11) **EP 2 256 425 A1**
(43) Date de publication de la demande: **01.12.2010**
(21) Numéro de dépôt: 09160506.3
(22) Date de dépôt: 18.05.2009
(51) Int. Cl.: F24F 13/28, B01D 46/10

(54) **Couteau d'étanchéité**

(71) Demandeur: Camfil, 92257 La Garenne Colombes Cedex (FR)
(72) Inventeur: Segond, Martin, 60500 Chantilly (FR); Tampere, Ludovic, 60870 Brenouille (FR)
(74) Mandataire: Colas, Jean-Pierre

(57) **Abrégé**

Dispositif d'étanchéité (6) pour un caisson (2) destiné à recevoir un filtre (4), caractérisé en ce qu'il comprend un couteau d'étanchéité (30) prévu pour coopérer avec un bain (20) porté par ledit filtre, le couteau réalisé d'une seule pièce avec ledit caisson. Lorsque le caisson comprend une paroi en tôle (24), le couteau est avantageusement formé d'un pli (31, 32) écrasé de la tôle.

Un tel dispositif d'étanchéité résout les inconvénients des couteaux d'étanchéité rapportés, notamment par soudage, sur les caissons de filtration.

## Description

La présente invention se rapporte à un dispositif d'étanchéité, plus particulièrement à un dispositif d'étanchéité à l'air entre un filtre à air et un caisson prévu pour porter ce filtre à air.

Il est généralement prévu un dispositif d'étanchéité entre le caisson et le filtre qu'il porte, de sorte que l'air à filtrer passe nécessairement par le filtre et non pas entre le filtre et le caisson, ce qui diminuerait notablement l'efficacité de la filtration.

Une telle étanchéité peut être réalisée par un système à couteau d'étanchéité. Un tel système comprend généralement une gorge périphérique, qui peut être portée par le filtre. La gorge contient un bain, généralement un gel. Le système comprend en outre un couteau, c'est-à-dire un profil plat porté de façon étanche par le caisson, et qui plonge dans le bain.

Le couteau est réalisé par un profilé métallique, en équerre, soudé continûment sur le caisson, une patte de l'équerre servant à sa fixation sur le caisson, l'autre formant couteau. Un cordon de mastic est aussi généralement disposé à la jonction de l'équerre et du caisson, pour compléter l'étanchéité. Une telle étanchéité présente néanmoins des inconvénients, notamment de durabilité. En effet, si la soudure est de mauvaise qualité, ou si elle est soumise à une atmosphère agressive, si le mastic se détériore avec le temps, une fuite peut avoir lieu entre l'équerre formant couteau et le caisson qui la porte.

Le but de l'invention est de proposer un dispositif d'étanchéité à l'air entre un filtre à air et un caisson prévu pour porter ce filtre à air qui présente une garantie d'étanchéité supérieure aux dispositifs décrits ci-dessus.

A cet effet, l'invention a pour objet un dispositif d'étanchéité pour un caisson destiné à recevoir un filtre, comprenant un couteau d'étanchéité prévu pour coopérer avec un bain porté par ledit filtre et réalisé d'une seule pièce avec ledit caisson, ce dispositif étant remarquable en ce que ledit couteau comporte une paroi comprenant deux épaisseurs qui s'étendent dans la continuité l'une de l'autre et de la paroi dudit caisson.

De préférence, le caisson comprend une paroi en tôle et le couteau est formé d'un pli écrasé de ladite tôle. Ce pli s'étend de préférence sensiblement perpendiculairement à la paroi. Dans une position d'usage, le pli s'étend préférentiellement sensiblement verticalement vers le bas.

L'invention a également pour objet un caisson de filtration remarquable en ce qu'il comprend un dispositif d'étanchéité tel que défini ci-dessus.

L'invention a encore pour objet un dispositif de filtration est remarquable en ce qu'il comprend un caisson tel que défini ci-dessus et un filtre adapté pour former un système d'étanchéité en combinaison avec le couteau du dispositif d'étanchéité selon l'invention.

D'autres particularités et avantages de l'invention ressortiront encore de la description ci-après, relative à des exemples non limitatifs.

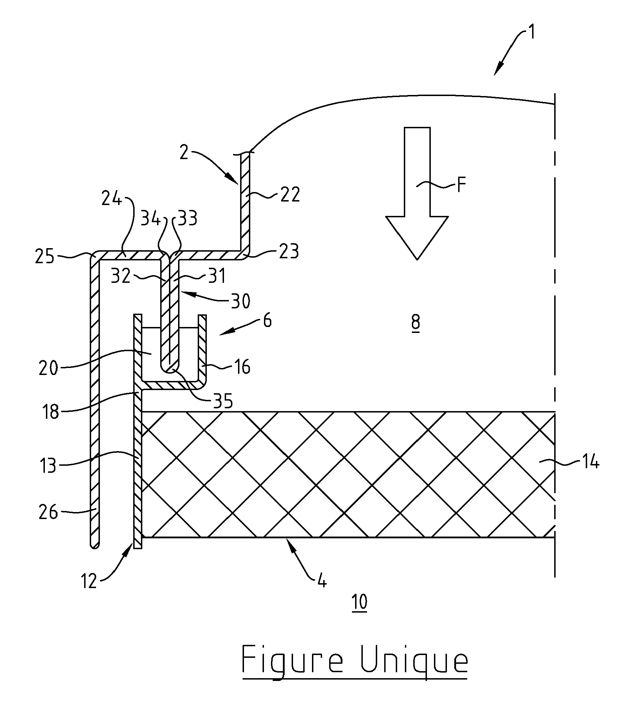

La figure unique est une demi-coupe verticale d'un dispositif de filtration d'air comprenant un système d'étanchéité selon l'invention.

En se reportant à la figure unique, un dispositif 1 de filtration d'air comprend notamment un caisson de filtration 2 et un filtre 4 porté par le caisson 2. Le caisson et le filtre sont équipés d'un système d'étanchéité 6 selon l'invention. De l'air est prévu pour se déplacer selon une direction d'écoulement F, depuis un espace interne 8 de distribution d'air, en amont du filtre 4, pour être émis au travers du filtre dans un milieu 10, en aval du dispositif de filtration 1. Dans l'exemple décrit, la direction F de l'air est sensiblement verticale, vers le bas

Le filtre comprend une structure 12 formant une paroi périphérique 13 et servant de squelette pour un média filtrant 14. Dans le mode de réalisation décrit, la structure comprend en outre une gorge périphérique 16, formée le long d'une rive supérieure 18 de la paroi 13, et d'une seule pièce avec la paroi 13.

Dans la configuration d'usage illustrée à la figure, la gorge contient un bain formé d'un gel 20.

Le caisson 2 est réalisé en tôle pliée. Il comprend, d'amont en aval, une section étroite 22, un épaulement 24 et une section élargie 26. La section étroite s'étend sensiblement parallèlement à la direction d'écoulement F. L'épaulement 24 s'étend sensiblement transversalement à la direction d'écoulement F, en s'élargissant depuis une rive ou angle 23, disposée en aval de la section étroite 22 suivant la direction de la flèche F, jusqu'à une rive ou angle 25 disposée en amont de la section élargie 26. La section élargie s'étend depuis la rive 25 sensiblement parallèlement à la direction d'écoulement F.

Un couteau d'étanchéité 30, qui a la forme d'une lame, s'étend sensiblement verticalement et vers le bas (c'est-à-dire suivant le sens de la flèche F) à partir de l'épaulement 24, à distance des rives 23,25. Ce couteau est formé d'une seule pièce avec l'épaulement 24.

Dans l'exemple illustré, le couteau 30 est réalisé par pliage de la tôle du caisson 2. Il comprend deux épaisseurs de tôles 31,32 rabattues l'une contre l'autre en formant un pli écrasé. Une première épaisseur 31 du couteau 30 s'étend, depuis une pliure 33, à 90° par rapport à une partie de l'épaulement 24 qui s'étend depuis la rive 23. La deuxième épaisseur 32 s'étend, depuis une pliure 34, à 90° par rapport à une partie de l'épaulement 24 qui s'étend jusqu'à la rive 25. Les épaisseurs 31,32 sont reliées entre elles, à distance de l'épaulement 24, par une pliure 35 qui forme un bord distal du couteau 30. Ainsi, le couteau 30 présente une paroi comportant deux épaisseurs 31, 32 qui s'étendent dans la continuité l'une de l'autre et de la paroi 24 dudit caisson.

Des moyens de fixation, non représentés, permettent la fixation du filtre 4, par sa structure 12, à la section élargie 26.

Dans la position d'usage, le couteau plonge dans le bain 20 formant une étanchéité à l'air, entre l'espace 8 et le milieu 10. Le couteau étant formé d'une tôle qui s'étend continûment depuis la section étroite 22 jusqu'à la section élargie 26, les problèmes d'étanchéité liés aux systèmes de l'art antérieur sont supprimés. En outre, le couteau étant une partie intégrante du caisson, il participe à la rigidité du caisson. Pour une même rigidité, l'épaisseur de la tôle peut ainsi être réduite par rapport aux caissons de l'art antérieur, et, le risque de déformation du caisson peut être réduit.

Un autre avantage vient du fait qu'un cordon de soudure n'étant pas lisse, il est difficile à nettoyer ou à maintenir propre. Au contraire, dans un dispositif d'étanchéité selon l'invention dépourvu de cordon de soudure, la décontamination biologique du dispositif est facilitée.

De plus, alors que les couteaux de l'art antérieur avaient une tendance à se déformer, du fait notamment de la double épaisseur du pli, un couteau tel que décrit dans l'exemple gagne en rigidité.

En outre, l'invention permet :
- un gain de temps, du fait notamment de la suppression d'une opération de soudage, et de réduction du nombre de pièce à traiter.
- un nombre de pièce réduit, puisqu'il n'y a plus de pièce spécifique au couteau, et,
- un gain de qualité, puisque aucune reprise de soudure n'est plus nécessaire.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif d'étanchéité (6) pour un caisson (2) destiné à recevoir un filtre (4), comprenant un couteau d'étanchéité (30) prévu pour coopérer avec un bain (20) porté par ledit filtre, ledit couteau étant réalisé d'une seule pièce avec ledit caisson, **caractérisé en ce que** ledit couteau (30) comporte une paroi comprenant deux épaisseurs (31, 32) qui s'étendent dans la continuité l'une de l'autre et de la paroi (24) dudit caisson.

2. Dispositif selon la revendication 1, **caractérisé en ce que** ladite paroi (24) est réalisée en tôle, et **en ce que** les deux dites épaisseurs sont formées par un pli écrasé (31,32) de ladite tôle.

3. Dispositif selon la revendication 2, **caractérisé en ce que** le pli (31, 31) s'étend de préférence perpendiculairement à ladite paroi (24).

4. Caisson destiné à recevoir un filtre (4), **caractérisé en ce qu'**il comprend un dispositif d'étanchéité (6) selon l'une des revendications précédentes.

5. Dispositif de filtration (2, 4), **caractérisé en ce qu'**il comprend un caisson (2) selon la revendication précédente et un filtre (4) adapté pour former un système d'étanchéité en combinaison avec le couteau (30) du dispositif d'étanchéité (6).
